# EUROPÄISCHE PATENTANMELDUNG

(11) **EP 2 813 732 A2**
(43) Veröffentlichungstag der Anmeldung: **17.12.2014**
(21) Anmeldenummer: 14171413.9
(22) Anmeldetag: 05.06.2014
(51) Int. Cl.: F16H 35/10

(54) **Überlastkupplung**

(30) Priorität: 10.06.2013 DE 102013106002
(71) Anmelder: Wittenstein AG, 97999 Igersheim (DE)
(72) Erfinder: Bitzer, Benedikt, 76139 Karlsruhe (DE); Göring, Martin, 79235 Vogtsburg (DE); Schütz, Henning, 76133 Karlsruhe (DE); Wall, Michael, 75365 Calw (DE); Weidemann, Raphael, 76133 Karlsruhe (DE); Zumstein, Tillman, 76133 Karlsruhe (DE)
(74) Vertreter: Zimmermann & Partner

(57) **Zusammenfassung**

Getriebeabtrieb für ein Getriebe, insbesondere für ein Planetengetriebe, mit einer Abtriebswelle (7), und einer Antriebswelle zur Übertragung eines Getriebeausgang-Drehmomentes zu der Abtriebswelle (7), und einer Überlastkupplung zur Verbindung der Antriebswelle (5) mit der Abtriebswelle (7), wobei die Abtriebswelle (7) ausschließlich in der Antriebswelle (5) gelagert ist oder die Antriebswelle (5) ausschließlich in der Abtriebswelle (7) gelagert ist.

## Beschreibung

### Gebiet der Erfindung

Die Erfindung betrifft einen Getriebeabtrieb für ein Getriebe, insbesondere für ein Planetengetriebe, ein Getriebe und eine Verwendung eines Getriebeabtriebs.

### Stand der Technik

Aus dem Stand der Technik sind Überlastkupplungen für Getriebe bekannt. So zeigt die US 6,309,304 ein Getriebe mit einer Überlastkupplung, welche im Kraftfluss in Reihe geschaltet sind.

Überlastkupplungen oder ein Überlastschutz haben die Aufgabe, im Überlastfall zuverlässig den Antriebsstrang mit Motor und Getriebe von einer Arbeitsmaschine zu trennen, so dass die gesamte Maschineneinheit und Umgebung geschützt wird. Durch die bekannten Bauweisen, wie beispielsweise Anflanschen einer Sicherheitskupplung an ein Getriebe, wird in Längsrichtung der Getriebeachse Bauraum benötigt, je nach Überlastkupplung in mehr oder weniger umfangreichem Ausmaß.

Als Nachteil bestehender Überlastkupplungen mit Getrieben kann angesehen werden, dass vergleichsweise viel Bauraum benötigt wird. Ein weiterer Nachteil kann die Notwendigkeit einer zusätzlichen Lagerung der Kupplung sein. Außerdem wirkt sich die hohe rotatorische Massenträgheit der Überlastkupplung und aller zusätzlich notwendigen Komponenten oft negativ auf das Gesamtsystem aus.

### Offenbarung der Erfindung

Aufgabe der Erfindung ist es, Getriebe, Getriebeabtriebe oder Überlastkupplungen zu verbessern, wobei insbesondere eine gute Bauraumausnützung neben weiteren möglichen Vorteilen wünschenswert ist.

Die Aufgabe wird mit einem Getriebeabtrieb, einem Getriebe und der Verwendung eines Getriebeabtriebs nach den unabhängigen Ansprüchen gelöst.

Ein erster Aspekt der Erfindung betrifft einen Getriebeabtrieb für ein Getriebe, insbesondere für ein Planetengetriebe, mit einer Abtriebswelle, und einer Antriebswelle zur Übertragung eines Getriebeausgang-Drehmomentes zu der Abtriebswelle, und einer Überlastkupplung zur Verbindung der Antriebswelle mit der Abtriebswelle, insbesondere zur Drehmomentübertragung von der Antriebswelle zu der Abtriebswelle, wobei die Antriebswelle oder die Abtriebswelle zumindest teilweise als Hohlwelle ausgeführt sind und wobei zumindest ein Teil der Überlastkupplung innerhalb der Antriebswelle oder der Abtriebswelle angeordnet ist.

Ein zweiter Aspekt der Erfindung betrifft einen Getriebeabtrieb für ein Getriebe, insbesondere für ein Planetengetriebe, mit einer Abtriebswelle, und einer Antriebswelle zur Übertragung eines Getriebeausgang-Drehmomentes zu der Abtriebswelle, und einer Überlastkupplung zur Verbindung der Antriebswelle mit der Abtriebswelle, insbesondere zur Drehmomentübertragung von der Antriebswelle zu der Abtriebswelle, wobei die Abtriebswelle ausschließlich in der Antriebswelle gelagert ist oder die Antriebswelle ausschließlich in der Abtriebswelle gelagert ist.

Ein weiterer Aspekt der Erfindung betrifft ein Getriebe, insbesondere ein Planetengetriebe mit einem Getriebeabtrieb in einer der typischen Ausführungsformen. Ein weiterer Aspekt der Erfindung betrifft die Verwendung eines Getriebeabtriebs in einer der typischen Ausführungsformen in einem Getriebe, insbesondere in einem Planetengetriebe.

Bei typischen Ausführungsformen von Getriebeabtrieben ist eine Abtriebswelle und eine Antriebswelle vorhanden, wobei die Antriebswelle zur Übertragung eines Getriebeausgang-Drehmomentes zu der Abtriebswelle dient. Die Abtriebswelle hat wiederum die Aufgabe, ein Drehmoment an einer Arbeitsmaschine oder einen anderen Verbraucher weiterzugeben. Typische Ausführungsformen umfassen eine Überlastkupplung zur Verbindung der Antriebswelle mit der Abtriebswelle. Die Überlastkupplungen typischer Ausführungsformen weisen eine Kraftübertragung an einer axial ausgerichteten Eingriffsfläche oder an einer radial ausgerichteten Eingriffsfläche auf. Bei radialen Eingriffsflächen können große Hebelarme realisiert werden, bei axialen Eingriffsflächen sind unter Umständen leichter Federelemente anzubringen. Bei weiteren Ausführungsformen sind auch Kombinationen einer axialen Eingriffsfläche und einer radialen Eingriffsfläche möglich. Dabei wird mit der Bezeichnung "radiale Eingriffsfläche" ein Aufbau bezeichnet, welcher typischerweise eine zylinderförmige Eingriffsfläche aufweist, welche auch unterbrochen sein kann. An dieser zylinderförmigen Eingriffsfläche können Walzkörper oder andere Eingriffselemente wie beispielsweise Nocken vorgesehen sein, welche in Vertiefungen oder Strukturierungen eingreifen. Analog ist mit einer axialen Eingriffsfläche typischerweise eine Eingriffsfläche gemeint, welche senkrecht zu einer Längsachse oder einer Drehachse der Überlastkupplung ausgerichtet ist.

Bei typischen Ausführungsformen ist die Antriebswelle oder die Abtriebswelle zumindest teilweise als Hohlwelle ausgeführt. Eine teilweise als Hohlwelle ausgeführte Abtriebswelle eignet sich dazu, um einen axialen Zugang zu einem Einstellelement, beispielsweise zu einer Feder, oder zu einem Montage- oder einem Befestigungselement zu ermöglichen. Auf diese Weise kann eine äußerst kompakte Bauform erreicht werden. Weiterhin wird mit der Hohlwelle erreicht, dass zumindest ein Teil der Überlastkupplung innerhalb der Antriebswelle oder der Abtriebswelle angeordnet werden kann. Bei typischen Ausführungsformen ist die Überlastkupplung vollständig innerhalb der Abtriebswelle angeordnet. Auf diese Weise wird eine kompakte Bauform erreicht. Bei weiteren Ausführungsformen steht abtriebsseitig ein Teil der Überlastkupplung über ein Ende der Abtriebswelle über.

Bei typischen Ausführungsformen ist die Abtriebswelle ausschließlich oder zumindest zum Teil in der Antriebswelle gelagert oder die Antriebswelle ausschließlich oder zumindest zum Teil in der Abtriebswelle gelagert. Eine ausschließliche Lagerung der Abtriebswelle und der Antriebswelle in der jeweils anderen Welle ermöglicht eine sehr kompakte Bauform, da in axialer Richtung keine zusätzliche Lagerung für die Abtriebswelle nötig ist. Das Lager zwischen der Abtriebswelle und der Antriebswelle ist typischerweise als Notlauflager ausgebildet, kann jedoch auch als beispielsweise Wälzlager ausgebildet sein. Ein Notlauflager zeichnet sich typischerweise dadurch aus, dass es Wälzlagerungsfrei ist oder aus zwei zylinderförmigen Flächen besteht, welche im Fall des Auslösens der Überlastkupplung aufeinander abgleiten. Nachdem die Lagerung lediglich dann Relativbewegungen aufnehmen muss, wenn die Überlastkupplung beim Auftreten einer Überlast auslöst, muss die Lagerung zwischen Antriebswelle und Abtriebswelle nicht zwangsläufig und bei jeder Ausführungsform auf Dauerfestigkeit bemessen sein. Auf diese Weise können eine einfache Bauweise und Kosteneinsparungen erreicht werden.

Bei typischen Ausführungsformen sind zumindest 70 % der axialen Länge der Abtriebswelle in der Antriebswelle aufgenommen. Auf diese Weise wird erreicht, dass beispielsweise eine Notlauflagerung einen ausreichenden Hebelarm gegen Kippmomente aufweist. Bei typischen Ausführungsformen ist die Antriebswelle in einem Gehäuse des Getriebes gelagert. Die Antriebswelle kann bei weiteren Ausführungsformen auch beispielsweise in einem Träger eines Hohlrades oder anderweitig gelagert sein. Bei typischen Ausführungsformen ist die Abtriebswelle zumindest teilweise außerhalb der Antriebswelle gelagert, beispielsweise in einem Gehäuse oder an einem Zwischenelement oder einem Lagerflansch. Eine Lagerung der Abtriebswelle außerhalb der Antriebswelle kann den Vorteil bieten, dass die Lagerung steifer wird.

Bei typischen Ausführungsformen ist die Antriebswelle als Planetenträger eines Planetengetriebes ausgebildet. Üblicherweise bedeutet dies auch, dass die Antriebswelle einstückig mit einem Planetenträger ausgebildet ist. Bei weiteren Ausführungsformen ist die Antriebswelle an dem Planetenträger lösbar befestigt, beispielsweise aufgeschraubt oder mit einem Montagemittel, wie beispielsweise einer Schraube, mehreren Schrauben oder Bolzen befestigt. Eine einstückige Ausführung der Antriebswelle mit dem Planetenträger bietet den Vorteil, dass eine äußerst kompakte und stabile Bauweise erreicht werden kann. Eine lösbare Befestigung der Antriebswelle unmittelbar an dem Planetenträger bietet den Vorteil eines modularen Aufbaus.

Bei typischen Ausführungsformen weist die Abtriebswelle einen Abtriebsflansch auf. Ein Abtriebsflansch bietet die Möglichkeit, unmittelbar ein Abtriebsritzel anzuflanschen, so dass eine äußerst kompakte Bauweise ermöglicht wird. An dem Abtriebsflansch können weitere Bauelemente wie beispielsweise Riemenscheiben angeordnet werden. Weitere typische Ausführungsformen weisen eine lang gestreckte Welle auf. Dies ermöglicht eine universelle Verwendung mit verschiedenen Kraftübertragungselementen auf der Abtriebsseite.

Typische Ausführungsformen des Getriebeabtriebs weisen eine Überlastkupplung mit Sperrkörpern auf. Die bei typischen Ausführungsformen als Sperrkörper eingesetzten Wälzkörper ermöglichen eine zuverlässige Übertragung des Antriebsdrehmoments auf die Abtriebswelle, wobei bei typischen Ausführungsformen die Antriebswelle mit der Abtriebswelle über die Wälzkörper in Eingriff steht. Typischerweise werden die Sperrkörper oder Wälzkörper in Ausnehmungen der Abtriebswelle oder der Antriebswelle angeordnet und in Vertiefungen der Antriebswelle bzw. der Abtriebswelle eingepresst. Typische Ausführungsformen von Getriebeabtrieben weisen Sperrkörper auf, welche mittels einer Federkraft beaufschlagt sind. Typischerweise erfolgt eine Kraftbeaufschlagung in axialer Richtung. Bei weiteren Ausführungsformen, insbesondere bei radialen Eingriffsflächen, kann eine Kraftbeaufschlagung in radialer Richtung vorteilhaft sein.

Eine Kraftbeaufschlagung erfolgt typischerweise mittels mindestens einer Feder, wobei auch eine hydraulische Kraftbeaufschlagung möglich ist. Federn von typischen Ausführungsformen von Getriebeabtrieben sind einstellbar ausgeführt. Typische Federn sind Spiralfedern oder Tellerfedern. Bei Tellerfedern, welche eine Kraftbeaufschlagung in axialer Richtung ermöglichen, wird bei typischen Ausführungsformen eine Einstellbarkeit in axialer Richtung vorgesehen. Eine solche Einstellmöglichkeit kann beispielsweise eine Stellschraube sein, welche über einen Zugang in der Hohlwelle der Abtriebswelle eine Einstellung ermöglicht. Eine weitere Einstellmöglichkeit ist eine Widerlagerscheibe für die mindestens eine Feder, wobei die Widerlagerscheibe in verschiedene Rastpunkte einsetzbar ist.

Getriebe oder Planetengetriebe gemäß typischen Ausführungsformen weisen eine Getriebeabtriebswelle einer der hierin beschriebenen Ausführungsformen oder Varianten auf. Bei einer Verwendung eines Getriebeabtriebs in einer der beschriebenen Ausführungsvarianten oder in anderen Varianten ergibt sich der Vorteil zur Möglichkeit einer äußerst kompakten Bauweise der Kombination eines Getriebes mit einer Überlastkupplung.

### Kurze Beschreibung der Zeichnungen

Nachfolgend werden Ausführungsformen anhand der beiliegenden Zeichnungen näher erläutert, wobei die Figuren zeigen:
- Fig. 1: zeigt eine Prinzipskizze eines Getriebeabtriebs einer ersten Ausführungsform; und
- Fig. 2: zeigt in einer schematischen Schnittzeichnung eine weitere Ausführungsform eines Getriebeabtriebs.

### Beschreibung typischer Ausführungsformen

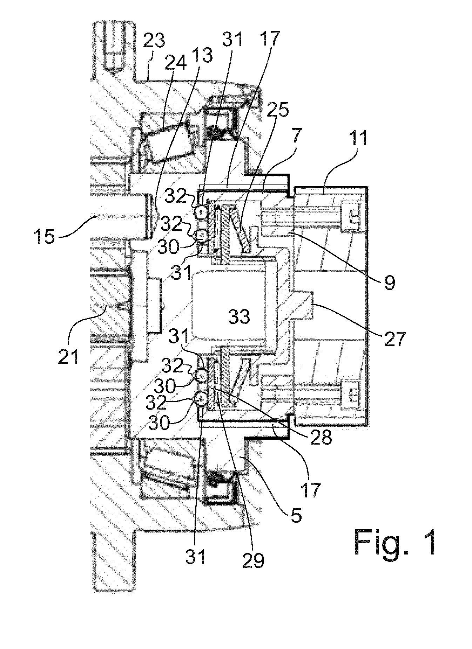

In der Fig. 1 ist eine erste Ausführungsform eines Getriebeabtriebs, welcher bei dieser Ausführungsform in einem Planetengetriebe verwendet wird, gezeigt. Der Getriebeabtrieb umfasst eine Überlastkupplung, welche zwischen einer Antriebswelle 5 und einer Abtriebswelle 7 angeordnet ist. Die Überlastkupplung bewirkt eine Unterbrechung oder eine Reduzierung der Drehmomentübertragung von der Antriebswelle 5 zu der Abtriebswelle 7.

An der Abtriebswelle 7 ist an einem Abtriebsflansch 9 ein Ritzel 11 angeflanscht. Über das Ritzel 11 ist eine Drehmomentübertragung an eine Arbeitsmaschine möglich. Sowohl das Ritzel 11 als auch die Abtriebswelle 7 sind hohl ausgeführt, wobei die Abtriebswelle 7 als Hohlwelle ausgebildet ist.

Die Antriebswelle 5 ist bei der Ausführungsform der Fig. 1 als Planetenträger ausgebildet. Dies bedeutet, dass die Antriebswelle 5 Aufnahmen 13 für Planetenwellen 15 umfasst.

Mit einer einstückig ausgebildeten Antriebswellen-Planetenträger-Kombination ist es bei Ausführungsformen möglich, eine kompakte Bauweise zu erreichen. Dabei kann die Antriebswelle Aufnahmen für Planetenwellen zur Lagerung der Planeten des Planetengetriebes umfassen oder es können Planetenwellen einstückig an der Antriebswelle angeordnet sein, beispielsweise angeschweißt sein oder einstückig ausgeformt sein.

Die Antriebswelle 5 ist mit der Abtriebswelle 7 über ein Notlauflager 17 verbunden. Das Notlauflager 17 ist eine zylinderförmige Grenzfläche zwischen der Antriebswelle 5 und der Abtriebswelle 7. Dabei ist die Abtriebswelle 7 in der teilweise hohl ausgeführten Antriebswelle 5 aufgenommen, wobei das Notlauflager 17 eine Verbindung herstellt, welche ausschließlich eine Drehung um die Längsachse 21 oder eine Verschiebung in Richtung der Längsachse 21 des Planetengetriebes zulässt.

Bei typischen Ausführungsformen ist ein Notlauflager vorgesehen, welches die Antriebswelle mit der Abtriebswelle verbindet. Das Notlauflager kann über eine Zwischenschicht aus einem Lagermaterial verfügen, beispielsweise PTFE oder Stahl. Bei typischen Ausführungsformen ist das Notlauflager zylinderförmig, wobei die Abtriebswelle zumindest zum Teil in einem hohlen Abschnitt der Antriebswelle aufgenommen ist. Bei weiteren Ausführungsformen umschließt die Abtriebswelle die Antriebswelle, so dass die Antriebswelle in der Abtriebswelle aufgenommen ist.

Die Antriebswelle 5 ist in einem Gehäuse 23 des Planetengetriebes mit einem ersten Wälzlager 24 gelagert. Das erste Wälzlager 24 dient auf diese Weise der direkten Lagerung der Antriebswelle 5 und indirekt über das Notlauflager 17 der Lagerung der Abtriebswelle 7. Das Notlauflager 17 nimmt im Betrieb die Radialkräfte, Axialkräfte, als auch die Kippmomente der Abtriebswelle 7 auf.

In dem Hohlraum, welcher durch die hohle Abtriebswelle 7 gebildet wird, ist die Überlastkupplung angeordnet. Die Überlastkupplung umfasst eine Tellerfeder als Feder 25, welche über eine Einstellmutter 27 vorgespannt werden kann. Mit der Einstellmutter 27 kann somit die Vorspannung der Feder 25 und damit eine Anpresskraft eingestellt werden. Die Feder 25 beaufschlagt über ein Axiallager 29 und eine Andruckplatte 28 Sperrkörper 30, welche bei der Ausführungsform der Fig. 1 als Kugeln ausgebildet sind.

Bei typischen Ausführungsformen umfasst die Sicherheitskupplung Sperrkörper, welche eine Drehmomentübertragung von der Antriebswelle auf die Abtriebswelle ermöglichen. Sperrkörper können bei typischen Ausführungsformen als Wälzkörper, beispielsweise Kugeln, Rollen oder Kegel ausgeführt sein. Wälzkörper bieten den Vorteil, dass bei dem Auftreten einer Überlast die Wälzkörper vergleichsweise verschleissarm abrollen können. Bei weiteren Ausführungsformen können auch Stifte, Nocken oder Kunststoffelemente als Körper eingesetzt werden.

Die Sperrkörper 30 der Ausführungsform der Fig. 1 sind in der Abtriebswelle 7 in Ausnehmungen 31 gelagert, wobei sie von einer Seite durch die Andruckplatte 28 Kraft-beaufschlagt werden. Durch die Kraft-Beaufschlagung mittels der Andruckplatte 28 werden die Sperrkörper 30 in Vertiefungen 32 in der Antriebswelle 5 gedrückt. Die Vertiefungen 32 sind in der axial ausgerichteten Eingriffsfläche der Antriebswelle 5 vorgesehen. Die Antriebswelle 5 umfasst einen Hohlzapfen 33, auf welchen die Einstellmutter 27 aufgeschraubt ist. Durch Drehen der Einstellmutter 27 ist es möglich, die Spannung der Feder 25 zu verändern und auf diese Weise ein Auslösemoment der Überlastkupplung einzustellen. An der Einstellmutter 27 ist eine Werkzeugaufnahme wie zum Beispiel ein Außen-oder ein Innen-Sechskant oder eine Aufnahme für einen Schraubendreher vorgesehen. Die Werkzeugaufnahme ist durch das hohle Ritzel 11 zugänglich.

Typische Ausführungsformen weisen eine einstellbare Überlastkupplung auf. Einstellbare Überlastkupplungen bieten die Möglichkeit, das Auslöse-Drehmoment an verschiedene Situationen anzupassen. Weitere Ausführungsformen weisen eine fixiert eingestellte Feder auf, welche eine definierte Kraft-Beaufschlagung erzeugt. Mit dem Ausdruck "Feder" sind hierin auch Kombinationen von mehreren Federn, als auch spezielle Federformen wie Tellerfedern, Spiralfedern, Kunststofffedern oder elastische Elemente, beispielsweise Blöcke aus Kunststoff, oder andere Federn umfasst. Die Federn müssen nicht notwendigerweise rein elastisch sein, sondern können auch einen dämpfenden Anteil aufweisen.

Die übrigen Teile des in der Figur 1 dargestellten Planetengetriebes dienen der Kraftübertragung und Übersetzung eines Antriebsdrehmomentes von einem Motor. Zur Funktionsweise von Planetengetrieben wird auf die einschlägige Literatur verwiesen. Typische Ausführungsformen umfassen Überlastkupplungen, welche in Planetengetrieben integriert sind oder mit Planetengetrieben integriert aufgebaut sind. Weitere Ausführungsformen sind abtriebsseitig an Planetengetrieben angebaut. Bei weiteren Ausführungsformen sind Stirnradgetriebe in Kombination mit Getriebeabtrieb-Ausführungsformen der Erfindung vorgesehen.

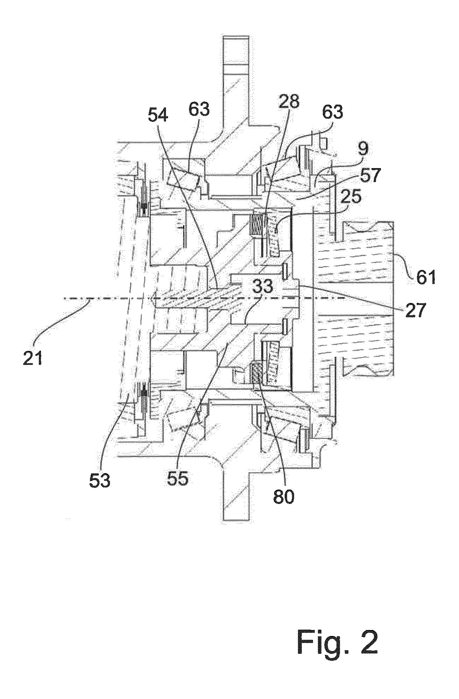

In der Figur 2 ist eine weitere Ausführungsform eines Getriebeabtriebs in einer schematischen Skizze gezeigt. Gleiche oder ähnliche Teile wie bei dem Ausführungsbeispiel der Fig. 1 sind in der Fig. 2 mit gleichen Bezugszeichen gekennzeichnet und werden eventuell nicht noch einmal erläutert.

Die Ausführungsform der Fig. 2 umfasst wiederum ein Planetengetriebe, das in der Figur 2 nicht vollständig gezeigt ist, welches in einem Gehäuse aufgenommen ist. Das Planetengetriebe umfasst einen Planetenträger 53. Eine Antriebswelle 55 ist an dem Planetenträger 53 mittels einer Schraube 54 axial befestigt, wobei das Drehmoment über eine Evolventenverzahnung zwischen Antriebswelle 55 und Planetenträger 53 übertragen wird. Die Antriebswelle 55 ist wiederum über eine Überlastkupplung mit einer Abtriebswelle 57 verbunden. Die Abtriebswelle 57 ist als Hohlwelle ausgeführt. In der Abtriebswelle 57 ist die Antriebswelle 55 zu einem Großteil aufgenommen. Die Überlastkupplung ist vollständig innerhalb der Abtriebswelle 57 aufgenommen. Die Überlastkupplung umfasst wie bei dem Ausführungsbeispiel der Fig. 1 eine Einstellmutter 27, mit welcher sich die Federkraft einer als Tellerfeder ausgeführten Feder 25 einstellen lässt. Die Einstellmutter 27 ist auf einem Hohlzapfen 33 der Antriebswelle 55 angeordnet. Durch den Hohlraum des Hohlzapfens 33 ist die Schraube 54 mit einem Werkzeug erreichbar. Dabei ist zu berücksichtigen, dass auch die Einstellmutter 27 eine Öffnung aufweist, beispielsweise eine Öffnung zum Ansetzen eines Sechskants. Die Abtriebswelle 57 ist vollständig als Hohlwelle ausgeführt. Am abtriebsseitigen Ende der Abtriebswelle 57 ist wiederum ein Flansch 9 zum Anflanschen eines Ritzels 61 angeordnet. Der Flansch ist typischerweise einstückig mit der Abtriebswelle ausgebildet.

Bei weiteren Ausführungsformen sind andere Werkzeugaufnahmen an Stelle des Sechskants vorgesehen.

Die Abtriebswelle 57 ist über ein Abtriebswälzlager 63 in einem Abtriebsgehäuse aufgenommen. Das Abtriebsgehäuse ist bei typischen Ausführungsformen an dem Gehäuse des Planetengetriebes befestigt. Bei weiteren Ausführungsformen ist lediglich ein integriertes Gehäuse zur Aufnahme des Planetengetriebes und der Abtriebswelle vorgesehen.

Die Feder 25 wirkt typischerweise über ein Axiallager auf eine Andruckplatte 28, welche Sperrkörper 80 mit einer Anpresskraft beaufschlagt. Das Axiallager kann bei Ausführungsformen als Wälzlager (siehe Fig. 1) oder wie in der Fig. 2 gezeigt als Gleitlagerung ausgeführt sein. Insbesondere kann auch die Ausführungsform der Fig. 2 mit einem Wälzlager als Axiallager ausgeführt sein. Wälzlager bieten im Allgemeinen eine geringere Reibung und Wärmeentwicklung. Das Axiallager hat die Aufgabe, die Feder, welche drehfest mit der Antriebswelle verbunden ist, im Überlastfall gegenüber der Abtriebswelle zu lagern und so zu verhindern, dass sich die Vorspannkraft der Feder und somit das Auslösemoment verändert. Die Sperrkörper 80 der Ausführungsform der Fig. 2 sind als Wälzlager in Form von Rollen ausgeführt. Die Rollen sind in Ausnehmungen der Abtriebswelle 57 aufgenommen. Durch die Kraft-Beaufschlagung mittels der Feder 25 werden die Sperrkörper 80 in Vertiefungen der Antriebswelle 55 gedrückt. Bei einem Überschreiten eines maximalen Drehmoments, also im Überlastfall, rücken die Sperrkörper 80 gegen die Federkraft aus und der rotatorische Kraftfluss zwischen Antriebswelle 55 und Abtriebswelle 57 wird getrennt.

Weitere Vorteile von Ausführungsformen sind eine verringerte Masse und ein verringertes Massenträgheitsmoment im Vergleich zu aus dem Stand der Technik bekannten Kombinationen von Getrieben mit Überlastkupplungen. Teilweise kommt es durch die Lösung der Ausführungsformen der Erfindung nicht nur zu einer kompakteren Bauweise sondern überhaupt erst zu der Anwendung einer Sicherheitskupplung bei bestimmten Anwendungen, da erst die kompakte Sicherheitskupplung mit den reduzierten Massenträgheitsmomenten eine Anwendung ermöglicht. Ein weiterer Vorteil der integrierten Bauweise von Ausführungsformen der Erfindung ist der Schutz vor Verschmutzungen. Dies ermöglicht insbesondere auch eine Anwendung im Ritzel-Zahnstangen-Bereich. Ausführungsformen der Erfindung werden daher unter anderem für Antriebe von Ritzel-Zahnstangen-Systemen verwendet.

Die Erfindung wurde unter Bezugnahme auf die Ansprüche in verschiedenen Ausführungsformen erläutert, wobei die Ausführungsform nicht als einschränkend zu verstehen sind, vielmehr wird der Umfang der Erfindung durch die Ansprüche bestimmt.

## Patentansprüche

1. Getriebeabtrieb für ein Getriebe, insbesondere für ein Planetengetriebe, mit
- einer Abtriebswelle (7, 57), und
- einer Antriebswelle (5, 55) zur Übertragung eines Getriebeausgangs-Drehmomentes zu der Abtriebswelle (7, 57), und
- einer Überlastkupplung zur Verbindung der Antriebswelle (5, 55) mit der Abtriebswelle (7, 57),
wobei die Abtriebswelle (7, 57) zumindest teilweise als Hohlwelle ausgeführt ist und wobei zumindest ein Teil der Überlastkupplung innerhalb der Abtriebswelle (7, 57) angeordnet ist.

2. Getriebeabtrieb nach Anspruch 1, wobei die Abtriebswelle (7, 57) ausschließlich in der Antriebswelle (5, 55) gelagert ist oder die Antriebswelle (5, 55) ausschließlich in der Abtriebswelle (7, 57) gelagert ist.

3. Getriebeabtrieb nach einem der vorhergehenden Ansprüche, wobei die Antriebswelle (5) als Planetenträger eines Planetengetriebes ausgebildet ist.

4. Getriebeabtrieb nach einem der vorhergehenden Ansprüche, wobei die Überlastkupplung Sperrkörper (30, 80) umfasst, welche mit der Antriebswelle (5, 55) und der Abtriebswelle (7, 57) in Eingriff stehen.

5. Getriebeabtrieb nach Anspruch 4, wobei die Sperrkörper (30, 80) Kraft-beaufschlagt sind.

6. Getriebeabtrieb nach Anspruch 4 oder 5, wobei die Sperrkörper (30, 80) durch eine einstellbare Feder (25) Kraft-beaufschlagt sind.

7. Getriebeabtrieb nach einem der vorhergehenden Ansprüche, wobei zwischen der Abtriebswelle (7, 57) und der Antriebswelle (5, 55) eine Notlauflagerung (17) vorgesehen ist.

8. Getriebeabtrieb nach einem der vorhergehenden Ansprüche, wobei die Abtriebswelle (7, 57) einen Abtriebsflansch (9) aufweist.

9. Getriebe, insbesondere Planetengetriebe mit einem Getriebeabtrieb nach einem der vorhergehenden Ansprüche.

10. Verwendung eines Getriebeabtriebs nach einem der Ansprüche 1 bis 8 in einem Getriebe, insbesondere in einem Planetengetriebe.
